# EUROPEAN PATENT APPLICATION

(11) **EP 1 122 015 A2**
(43) Date of publication of application: **08.08.2001**
(21) Application number: 01102413.0
(22) Date of filing: 02.02.2001
(51) Int. Cl.: B23H 7/20

(54) **Electronic manual search system, searching method, and storage medium**

(30) Priority: 02.02.2000 JP 2000024856
(71) Applicant: NEC CORPORATION, Tokyo (JP)
(72) Inventor: Baba, Noriko, c/o NEC Corporation, Tokyo (JP)
(74) Representative: Betten & Resch

(57) **Abstract**

An electronic manual search system is provided which can search topics in the manual in descending order of reference frequency of topic. The system stores reference numbers of the topics in the past for each topic, using the reference numbers, searches the topics in descending order of the reference number of topic and displays the search result in the order when search process is performed.

## Description

### BACKGROUND OF THE INVENTION:

### Field of the Invention

The invention relates to a search system of an electronic manual and, in particular, to the search system which gives priority of extracting to parts which are included in the electronic manual and which have higher a frequency of reference in the past.

### Description of the Related Art

For past several years, art related to a computer has been developed drastically and a variety of systems using computers have been introduced into many businesses. Simultaneously, techniques related to a plurality of application programs (software programs) used in the systems have also made remarkable progress and tend to be complicated and sophisticated. When the techniques have been thus complicated and sophisticated to intricate functions of the application programs, operations for the application programs and commands of the application programs have also been complicated and the number of the commands have been increased.

Most of the application programs include online help function to explain operations and commands of itself. For example, a help command or a help function included in an operating system, and a help function or a command reference of an interactive program development tool actually can supply the online help function.

On the other hand, a computer comes to be used to refer to an electronic dictionary.

A computer user can obtain necessary knowledge by searching contents supplied from the help function or the electronic dictionary.

Hereinafter, electronic information which is objected to be searched by the help function of the application program or searching the electronic dictionary, is collectively referred to as "electronic manual". The electronic manual can have variety of types of configurations, but in general, includes a set of parts each of which includes an explanation about an event. For example, conditions in which the event occurs and a list of a similar event are stored as the explanation.

Herein, the part is referred to as "topic". Index data are made for the topics and each topic has a "title". Contents displayed after searching an electronic manual having such configuration, are generally one or a plurality of topics (or titles of topics) which include a character string designated for searching.

However, the electronic manual does not always have a plurality of topics but the manual may be configured as a great text base flat file. In this case, contents displayed as searching results are identifications that express a location of a part including a searching word, such as a line, a page, a block, and a chapter of the part.

As described above, searching of the electronic manual is performed in several ways and for many necessities, but the following four searching methods are popular among the present methods. Further, in this specification, a proper name is added to each of the following four methods for the sake of identifying.
(1) Title searching method: an electronic manual includes a plurality of topics and when a user designates a searching keyword, topics each of which includes a title including the keyword are displayed as searching results.
(2) Keyword searching method: when a user designates a searching keyword, topics including the keyword are displayed as searching results.
(3) Hierarchical menu method: a table of contents of an electronic manual is configured hierarchically in advance, a user can reach a target topic by narrowing down the table from major concept to narrower concept in order.
(4) Wizard type method: when a user inputs his/her object or question, a system automatically analyzes the object or the question and estimates proper results of search from the analysis to supply the results to the user.

On the other hand, there also are many methods of displaying results of search. The following two methods are outstanding at the present. Further, in this specification, a proper name is also added to each of the following two methods for the sake of identifying.
(1) List form displaying method: searching of keyword is performed for all topics and parts of topics including the keyword, for example, titles of the topics are displayed in a list form. A user selects a desired topic from the listed topics seeing displayed titles and contents of the selected topic are displayed.
(2) Sequential displaying method: when a topic (or a part) including a search keyword is found, the result is displayed to a user. And the user determines continuation of the search. If desired topic is found, the user stops the search, otherwise the user a predetermined operation to continue searching.

The above mentioned searching methods and displaying method of search result can be combined according to environment of search system and so on, and variety of types search functions are supplied to a user. The search functions may be further diversified by changing data configuration of the electronic manual to be searched.

However, in such conventional searching method, a result which is far from a desired result which a user actually want to get is often displayed. This leads to displaying of a great number of topics which are irrelevant to the desired result when the list form displaying method is used, and to much time to reach the desired result when the sequential displaying method is used (that is, the user must carry out many operations to designate continuation of search).

Further, in a conventional searching method, it is impossible to give priority to extract a topic or a location which have been extracted as search result in the past. It may be thought that a topic which have been extracted many times in the past has great "importance of information". Therefore, it may often efficient to give priority to display such the topic having great "importance of information".

In a conventional searching method, to realize the priority for displaying the topic, bookmark is attached to a topic extracted as search result and after that, when the same topic is to be searched, the topic can be quickly extracted and displayed by using the bookmark. But, the bookmark is attached to the topic only when a user explicitly designates to "attach the bookmark" to the topic displayed as search result. Furthermore, when search operation is performed using thus attached bookmarks, a topic is identified and displayed at one time which corresponds to a bookmark. Therefore, in a conventional search method, it is impossible to display topics simultaneously which correspond to a plurality of bookmarks which satisfy a search condition. This means that it is substantially impossible to give priority to extract (or display) topics which have been referred many times in the past.

Furthermore, the conventional searching method must always search whole of the electronic manual when search is performed, since each topic does not have information related to frequency of reference of itself (that is, importance of information). It is to much time to search whole of the electronic manual if the manual has a large amount of contents, this is undesirable for a search system.

### SUMMARY OF THE INVENTION:

It is, therefore, an object of the invention to provide an electronic manual search system which manages "importance of information" related to topics in the manual by automatically counting a topic which a user has referred to as search result in the past, and by recording the number of times topics are referred to (reference number), for each topic.

Furthermore, it is an object of the invention to provide an electronic manual search system which, in searching process, gives priority to search and display topics having large past reference number.

Still further, it is an object of the invention to provide an electronic manual search system which is capable of decreasing processing time to search topics by narrowing down topics to be searched using the past reference number.

According to a first aspect of the invention, there is provided an electronic manual search system including an electronic manual which is composed of a plurality of parts. The system comprises a reference number table which stores, for each part of the electronic manual, reference number expressing the number of times the part is referred to by a user, a search process unit which searches contents of the parts based on a search condition, and a search result display unit which displays parts which resulted from the search process unit, in order based on the reference number.

Thereby, in displaying the search results of the electronic manual, the number of times the topic in the search results is referred to by the user in the past, is considered.

According to a second aspect of the invention, there is provided a method of searching an electronic manual which is composed of a plurality of parts. The method comprises the steps of storing, for each part, reference number expressing the number of times the part is referred to by a user, searching contents of the parts based on a search condition, and displaying parts which resulted from the searching step, in order based on the reference number.

Thereby, in displaying the search results of the electronic manual, the number of times the topic in the search results is referred to by the user in the past, is considered.

According to a third aspect of the invention, there is provided a recording medium readable by a computer, tangibly embodying an electronic manual. The electronic manual comprises a plurality of parts, and a reference number of each part, the reference number representing the number of times the corresponding topic is referred to as searched results.

Thereby, it is possible to display the search results based on the reference number accumulated in the other site.

According to a fourth aspect of the invention, there is provided a recording medium readable by a computer, embodying a program of instructions executable by the computer to perform a method of searching an electronic manual which is composed of a plurality of parts. The method comprises the steps of storing, for each part, reference number expressing the number of times the part is referred to by a user, searching contents of the parts based on a search condition, and displaying parts which obtained by the searching step as search results, in order based on the reference number.

Thereby, in displaying the search results of the electronic manual, the number of times the topic in the search results is referred to by the user in the past, is considered.

According to a fifth aspect of the invention, there is provided a computer data signal embodied in a carrier wave and representing a sequence of instructions which, when executed by a processor, cause the processor to perform the actions of storing, for each part of an electronic manual, reference number expressing the number of times the part is referred to by a user, searching contents of the parts based on a search condition, and displaying parts which are obtained by the searching step as search results, in order based on the reference number.

According to a sixth aspect of the invention, there is provided a program product comprising, computer readable instructions and a recording medium bearing the computer readable instructions. The instructions are adaptable to enable a computer to operate according to the steps of storing, for each part of an electronic manual, reference number expressing the number of times the part is referred to by a user, searching contents of the parts based on a search condition, and displaying parts which are resulted from the searching step, in order based on the reference number.

### BRIEF DESCRIPTION OF THE DRAWINGS:

Fig. 1 shows a block diagram of an electronic manual search system of an embodiment of the invention;
Fig. 2 shows an example of contents of a reference number table;
Fig. 3 shows another example of contents of the reference number table;
Fig. 4 shows a flowchart representing an operation of the embodiment of the invention;
Fig. 5A shows a diagram schematically representing searching method of the invention;
Fig. 5B shows a diagram schematically representing searching method of the prior art;
Fig. 6 shows a flowchart representing an operation of a second embodiment of the invention; and
Fig. 7 shows a block diagram representing configuration of a computer used in the electronic manual search system of the invention.

### DESCRIPTION OF THE PREFERRED EMBODIMENT:

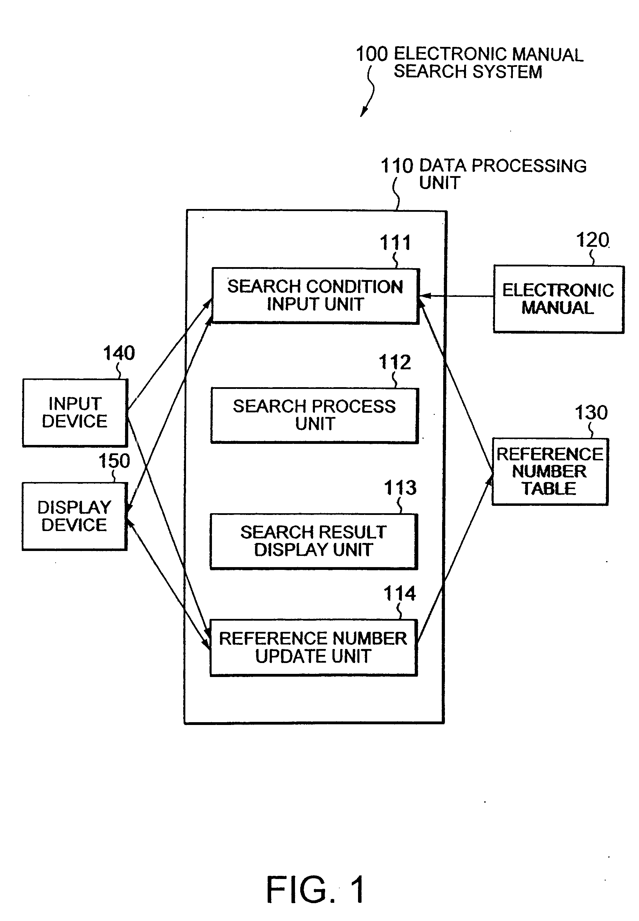

At first, illustration is made about an electronic manual search system of an embodiment of the invention with reference to Fig. 1.

In Fig. 1, the electronic manual search system 100 includes a data processing unit 110, an electronic manual 120, a reference number table 130, an input unit 140, and a display unit 150.

Next, description is made about the electronic manual 120 and the reference number table 130.

The electronic manual 120 is electronic information used, for example, as an object of search in an online help function incorporated into operating system or application program or in a search tool of an electronic dictionary. The electronic manual 120 includes a large number of topics and one of the topics includes an explanation of an object matter.

For instance, in a online help function of operating system, an explanation about an object matter "usage of keyboard" is stored as a topic. Also, in a command reference supplied by an application program, usage, arguments, and related commands for a command "Is" are stored as a topic.

There also is another aspect of the electronic manual 120 which does not include topics. The manual 120 may include a simple and large text base flat file or an HTML base file.

The reference number table 130 stores reference number for each topic. The reference number represents the number of times a topic is extracted or displayed as a search result by a user (or by a system).

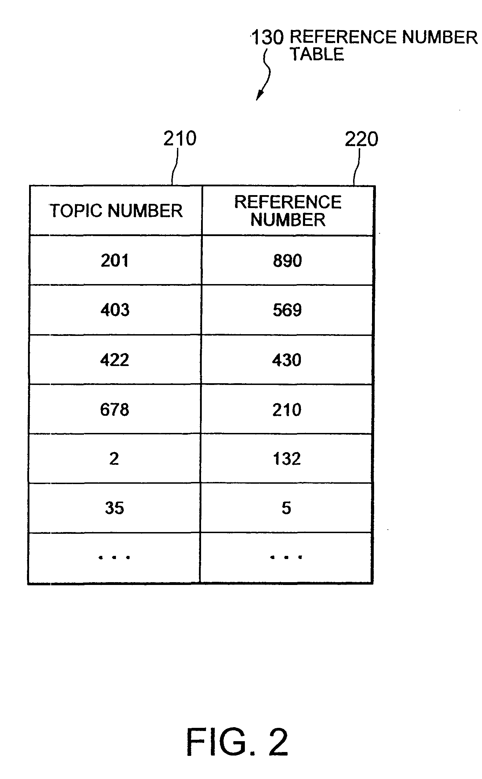

Referring to Fig. 2, the reference number table 130 includes two items, namely, a topic number 210 and a reference number 220. The topic number 210 includes a number which corresponds to one of the topics in the electronic manual. The reference number 220 includes the reference number or a reference frequency of the corresponding topic specified by the corresponding topic number 210. The information in the items 210 and 220 is updated by a reference number update unit 114 as described later. The reference numbers in the reference number table 130 are updated by accumulating user reference from each time when the reference number table 130 is introduced or referred to. But, the reference numbers may be cleared on the way and it is possible to capture reference numbers in a predetermined period.

The reference number table 130 is generally configured of indexed database and can be logically read in descending order of magnitude of the reference number. Also, topic number corresponding a topic which has been never referred in the past (that is, the reference number is equal to zero) is not stored.

In the embodiment of the invention, the reference number is managed for each topic in the electronic manual 120, but the reference number can be managed for each line, page, chapter, or block according to configuration of the electronic manual 120. Also, if the electronic manual 120 is a flat file or an HTML file as described above, the reference number may be captured for each line, page, or addresses which represent a specific range in the file.

In the embodiment of the invention, the reference number table 130 and the electronic manual 120 are represented as individual entities, but the table 130 and the manual 120 can be united by, for example, incorporating information in the table 130 into each topic in the manual 120. In this case, an additional storage area is prepared for each topic, and the information in the table 130 is stored in the area related to the corresponding topic, and updated as the occasion demands.

Referring to Fig. 1 again, the electronic manual search system 100 includes the input unit 140 and the display unit 150. The input unit 140 is used to give a condition or an instruction to the system 100 and is, for example, a keyboard or a mouse. The display unit 150 is, for example, a CRT display device to provide a search condition input screen or a search result display screen to a user.

The data processing unit 110 performs variety of operations for the electronic manual search system 100. The data processing unit 110 includes a search condition input unit 111, a search process unit 112, a search result display unit 113, and a reference number update unit 114.

As described above, a title searching method, a keyword searching method, a hierarchical menu method, and a wizard type method are mainly used to search an electronic manual. But, in the hierarchical menu, the search condition input unit 111 is not carried out since user input (search condition input) is not necessary. When the title searching method or the keyword searching method is used, the search condition input unit 111 instructs the display unit 150 to display a search condition input screen so that the user gives keyword as search condition to the unit 111 via the input unit 140. A plurality of keywords can be input and in the case, the other symbols "and", "or", "(", or ")" which represents relationship between the keywords can be added. In the wizard type method, a user gives a series of sentences to the system 100 via the input unit 140.

The search process unit 112 searches contents of the electronic manual 120 based on a search condition supplied by the user, and extracts topics which satisfy the search condition (for example, a topic including the keyword which designated in the search condition). But, in the hierarchical menu method, the search process unit 112 is not substantially carried out since contents of table to be displayed are prepared in advance.

In search process in the search process unit 112, the topic numbers 210 stored in the reference number table 130 are referred in descending order of magnitude of the topic number, that is, search process is performed from high importance of topic. Concrete description about the search process is made later with reference to a flowchart.

The search result display unit 113 displays a search results extracted by the search process unit 112 in a predetermined form. As described above, the list form displaying method and the sequential displaying method are mainly used to display search results. In the former, after the search process unit 112 searches all topics in the electronic manual 120, the search results are collectively displayed. On the other hand, in the later, whenever a topic which satisfies a search condition designated by a user is found in the electronic manual 120, the topic is displayed as search result. In this case, the unit 113 has user interface to receive from the user, an instruction to instruct the unit 113 to continue searching and displays next topic which satisfies the search condition or an instruction the unit 113 to stop the search process.

If the user instructs to continue searching, the unit 113 instructs the search process unit 112 to search the next topic and displays the search result. If the user does not instruct to continue, the unit 113 determines that the topic presently displayed is desirable for the user and stops displaying at the predetermined timing.

The reference number update unit 114 updates the reference number table 130 by incrementing by one a reference number corresponding to a topic number of a topic, when a user refers to the topic as a desirable topic among search results. Thus updated reference number table 130 is used in the next search process. For example, the "desirable topic" is a topic which resides in the lowest layer in hierarchical display structure and is referred to by the user in the list form displaying method. Alternatively, the "desirable topic" is a topic which is displayed immediately before the displaying of the topic is suspended in the sequential displaying method.

Also, "the referring timing of the topic" is, for example, when the desirable topic is actually referred in the list form displaying method, or is, for example, when the displaying of the topic is ended in the sequential displaying method.

Further, criteria used to determine such the "desirable topic" and "the referring timing of the topic" should be carefully adjusted for each displaying method, but they are not limited to the above mentioned criteria.

For example, there may be a case where a user determines that a topic is not desirable and proceeds to the next topic, even if the user refers to the topic of the lowest layer in the list form displaying method.

The user gives a search condition to the system 100 via the search condition input unit 111 and refers to search results supplied by the search result display unit 113, and if necessary, selects a topic or instructs to continue searching.

The user is not always one person. For example, a plurality of users can share the electronic manual search system 100 of the invention by using the Internet or an in-house LAN. In the case, the reference number of topic may be determined based on references by all the users.

Also, if a plurality of users use the system 100, it is effective to manage the reference number for each user's attribute and to reflect the reference number on the next search process. This is because that a user who belongs to a specific attribute tends to refer to a specific group of topics. For example, it assumed that users are classified into three skill levels for a field of technique, a beginners class, a middle class, and an upper class. Herein, if a user who belongs to the beginners class uses the system 100, the reference numbers of topics by the user are stored in the reference number table 130 as the reference number of topic related to the beginners class user. After that, in the system 100, if a beginners class user uses search process, the reference numbers which are in the reference number table 130 and are related to the beginners class user are used to determine the order of searching topics.

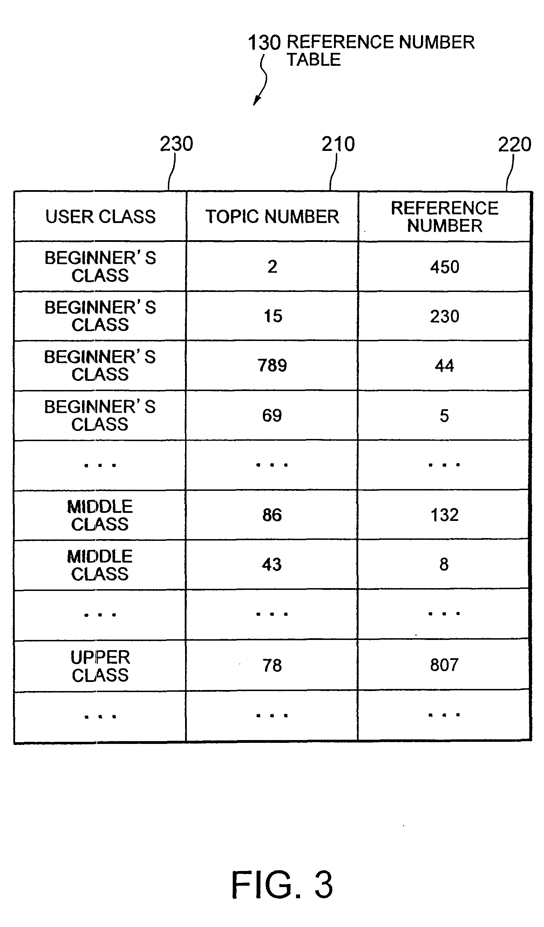

An example of the reference number table 130 in such the case is shown in Fig. 3. Herein, new item, a user class 230 is added compared with the table 130 shown in Fig. 2. In the item, one of three values, that is, beginners class, middle class, and upper class is established, and what type of user which the corresponding topic number 210 and reference number 220 are related to is shown.

Furthermore, users may be classified based on a department, a region, age.

Also, enhancing such the idea, a reference number table 130 which has been accumulated for a predetermined period in a department, may be distributed or sold to the other similar department or an organization. Thereby, the department or the organization which gets the ready-made table 130 can extract or display search results in a sophisticated and predetermined order from the beginning.

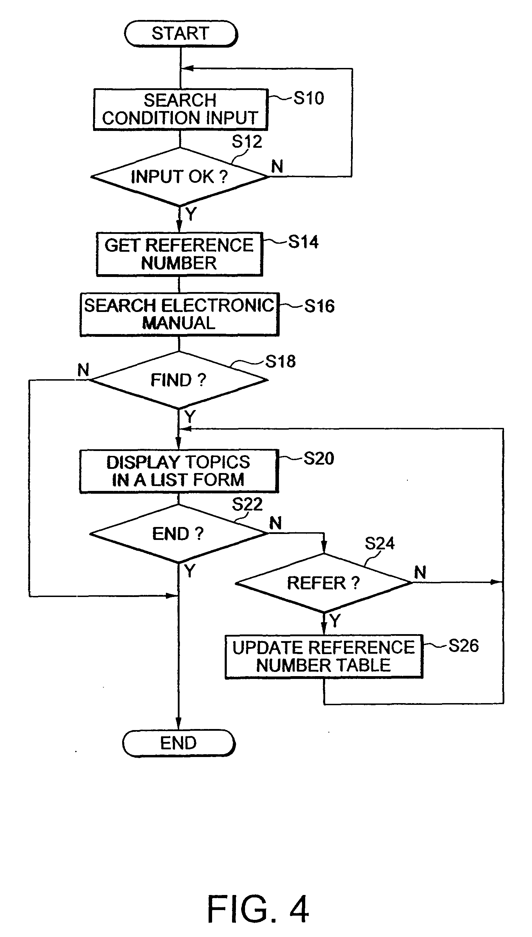

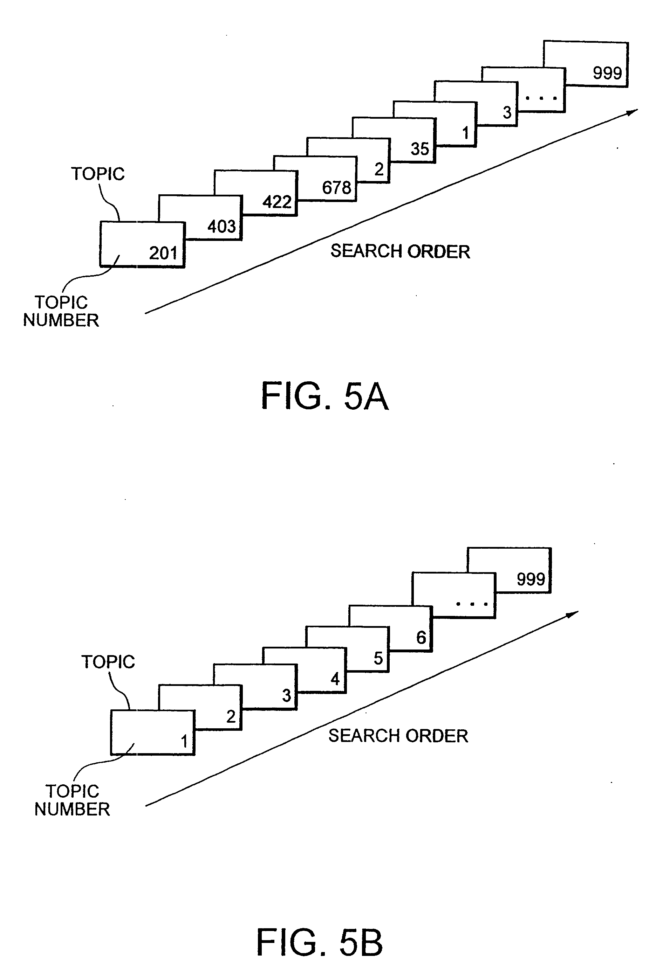

Next, detailed description is made about operations of the electronic manual search system 100 of the invention with reference to Figs. 4, 5A, and 5B.

Fig. 4 shows a flowchart of operations of an electronic manual search system 100 of a first embodiment of the invention. The system 100 adopts the keyword search method as search method and the list form display method as search result display method.

At first, the search condition input unit 111 inputs a search condition which a user designates into a search condition input screen (not shown) in step S10.

Next, the search condition input unit 111 checks the search condition (step S12) and if the condition is incorrect, the unit 111 display the search condition input screen again with an error message and proceeds to step S10. Otherwise, process proceeds to step S14. The check of the search condition is performed to check whether the designation of the search condition is grammatically correct or not. For example, if usage of parentheses is incorrect, it is determined an error occurs.

At step S14, the search process unit 112 refers to the contents of the reference number table 130 before search process, and gets the numbers of topics to be searched in descending order of magnitude of the reference number, that is in descending order of importance of the topic. When the reference number table 130 includes item, a user class 230 as shown in Fig. 3, the unit 112 gets the reference number corresponding to the same user class as the user who presently uses the system 100.

At step S16, search process is performed about the electronic manual 120 according to the search condition designated by the user. In particular, all topics which satisfy the search condition of the user are extracted from the electronic manual 120. Herein, for example, a topic including a character string designated by the user as the search condition, or a topic which satisfies a condition expressed by a plurality of character strings, "and", or "or" correspond to the topics which satisfy the search condition.

Also, the search process is performed from a topic in order of the topic number obtained at step S14 (that is, in descending order of importance of topic), and the search order of the topics is also held as search results.

Herein, assuming that contents of the reference number table 130 is as shown in Fig. 2, as shown in Fig. 5A, contents of topics are searched in order of a series of topic numbers, 201, 403, 422, 678, 2, 35, ..., at step S14. And hereinafter, search process is performed about the rest of topics (that is, topics corresponding to topic numbers which are not included in the reference number table 130). A rule of searching order of the rest of topics can be determined in advance.

Using the above mentioned method, topics can be searched in descending order of past reference frequency of topic.

On the contrary, in a conventional search method as shown in Fig. 5B, topics are searched for a topic satisfying a search condition of a user regardless of the past reference frequency of topic. For example, the topics are searched simply in ascending order of the topic number and the search results are displayed also in ascending order of the topic number.

At step S18, it is determined whether or not at least one topic satisfies a search condition of the user. If no topic satisfies the condition (step S18(no)), search process is ended. Otherwise (step S18(yes)), process proceeds to step S20, and the searched topics are displayed in a list form. As described above, the search results at step S16 also include the search order of the topics, therefore the searched topics (results) are displayed in descending order of reference frequency of topic if the search result display unit 113 displays them using the search order at step S20.

If the user watches the list of topics and determines that it is no need to search furthermore (step S22(yes)), search process is ended. If the user determines that additional search is necessary (step S22(no)), search process proceeds to step S24.

At step S24, if the user selects a specific topic and the topic is refereed to, process proceeds to step S26. Then, the reference number update unit 114 updates the reference number table 130. Specifically, if the topic number of the referred topic has already included in the table 130, the reference number 220 corresponding to the topic number is incremented by one. If the topic number is not included, a record including the topic number of the referred topic as "topic number" 210 and "1" as "reference number" 220 is inserted to the table 130.

If the user does not refer to topics (step S24(no)), process proceeds to step S20 and topics are displayed again.

The above mentioned flowchart shown in Fig. 4 merely illustrates operations of the electronic manual search system of the invention. Therefore, many other process flows may be used in the system.

For example, in this flowchart, after the reference number table 130 is updated at step S26, process proceeds to step S20 and then topics are displayed again, however in other flow, process may be completed without displaying topics or may displays a search condition input screen without completion.

Further, in the embodiment, topics are searched in descending order of reference frequency of topic, but the topics may be searched in ascending order of reference frequency of topic according to necessity of search.

Also, in the embodiment, search order of topics is determined before search process is actually performed, but since whole contents of the electronic manual are generally searched in the list form displaying method, searched topics may be rearranged in descending order of reference frequency of topic when search results are displayed which obtained by using the conventional method shown in Fig. 5B.

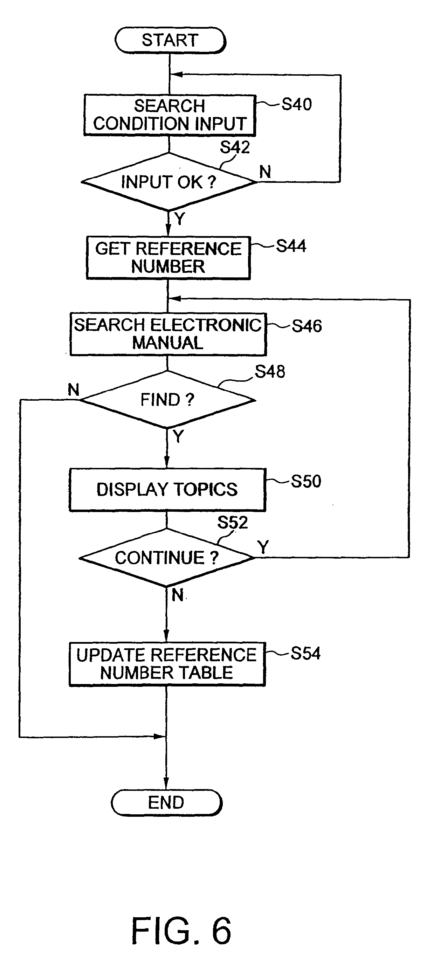

Next, description is made about operations of an electronic manual search system of a second embodiment of the invention with reference to a flowchart shown in Fig. 6. The system adopts the keyword searching method as a search method and the sequential displaying method as a search result display method.

Description about steps S40 - S44 is omitted since the steps are coincident with the steps S10 - S14 shown in Fig. 4.

At step S46, topics are searched for a topic having a search condition designated by user in order of topics corresponding to topic numbers which are obtained by a process of step S44. When a first topic having the search condition is found (step S48(yes)), process proceeds to step S50 and then the searched topic is displayed.

After that, the user watches the displayed topic, and determines whether the topic is desirable or not. If the user determines the topic is not desirable, the user instructs the system 100 to continue searching (step S52(yes)). When the continuation is instructed, process returns to step S46 and commences to search the next topic. If the next topic having the search condition is found, the topic is displayed at step S50.

The user instructs to continue searching or not continue searching at step S52, according to determination of the displayed topic.

The user can display topics which are desirable and satisfy the search condition in descending order of reference frequency of topic by repeating operations from step S46 to step S52. That is, this means that search process is performed from important topic and searched topics are displayed in the order. Thereby, it is very likely to find desirable topics at an early stage.

Also, when search process at step S46 detects a single topic having a search condition, the process displays the topic immediately, unlike process at step S16 shown in Fig. 4. Therefore, on the whole, it is likely to reduce a search time necessary to search the electronic manual 120.

At step S52, if the user instructs not to continue, process proceeds to step S54 and updates the reference number table 130 assuming that desirable topics are the topics which are displayed at the timing. An update method used to update the table 130 is similar to a method shown in step S26 in Fig. 4.

In this case, an instruction not to continue leads to determination that topics which are displayed at the timing are all desirable, but the determination may be done by the other conditions as far as the determination is automatically performed with no specific designation of the user.

The flowchart shown in Fig. 6 may be adapted, for example, to sequentially search a large flat file for a specific character string. In this case, parts which include a search condition of the user are displayed to the user, not in order of locations from the beginning of the file, but in descending order of reference frequency of part.

Also, the flowchart is merely shown as an example to explain operations of an electronic manual of the invention, therefore many other flows may be used.

Further, in the embodiment, topics are searched in descending order of reference frequency of topic in the same way as the first embodiment, but the topics may be searched in ascending order of reference frequency of topic according to necessity of search.

However, in the embodiment, unlike the first embodiment, it is impossible to rearrange search results in ascending order of reference frequency of topic after search process is completed since the sequential displaying method is adopted.

While this invention has thus far been described in conjunction with a few embodiments thereof, it will readily be possible for those skilled in the art to apply the idea of the invention to a search system including any combinations of one of the searching methods and one of the search result displaying methods by properly amending and adjusting the system.

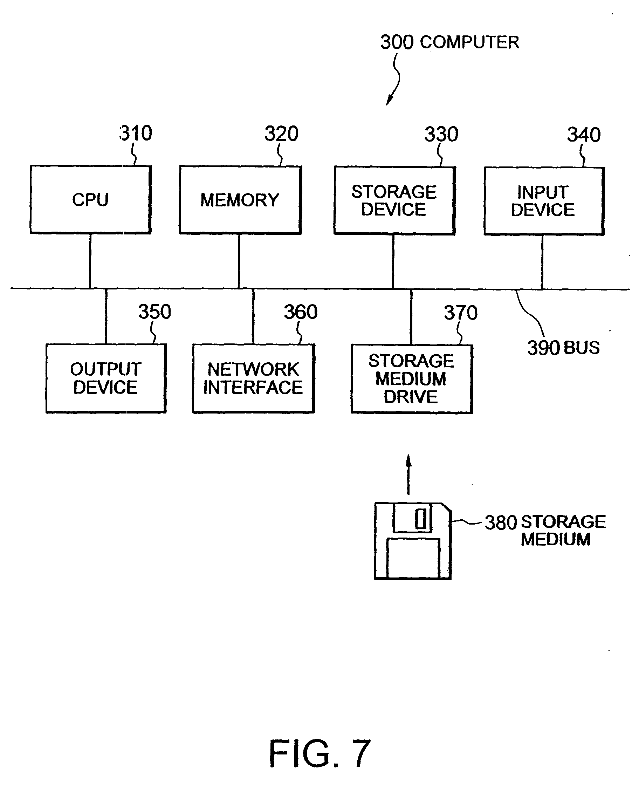

Next, description is made about hardware configuration of a computer which carries out an electronic manual search system 100 of an embodiment of the invention in conjunction with Fig. 7. In Fig. 7, a computer 300 is shown in which the electronic manual search system 100 is incorporated.

The system 100, in general, can be configured by a computer 300. But, additional database server can be located to share the electronic manual 120 and the reference number table 130 by a plurality of users.

Also, as described above, the system 100 can be shared by a plurality of users. For example, users can supply a search condition to the corresponding user terminal located far from the other user's terminal and can make the terminal display search result.

Therefore, the configuration shown in Fig. 7 is merely an example and it will readily be possible for those skilled in the art to construct the system of the invention by using a computer system of other configuration.

The computer 300 includes a CPU 310, a memory 320, a storage device 330, an input device 340, an output device 350, a network interface 360, a storage medium drive 370, and a bus 390. The computer is generally a personal computer or a workstation, but other variety types of computer may be used.

The CPU 310 carries out processes of each unit in the data processing unit 110 (unit 111 -unit 114) and controls data i/o between the units, and the electronic manual 120 and the reference number table 130.

The memory 320 temporarily stores data used by the CPU 310 a program to control the units.

It is desirable to temporarily store a search condition supplied from a user via the search condition input unit 111, search results extracted by the search process unit 112, and search order in the memory 320.

The storage device 330 stores the electronic manual 120 and the reference number table 130. The device 330 can be, as described above, shared by a plurality of users via a network.

The input device 340 corresponds to the input unit 140 shown in Fig. 1 and is used by a user to input a search condition, control a method of displaying search results, or instruct to continue searching. The device 340 is, for example, a keyboard or a mouse.

The output device 350 corresponds to the display unit 150 shown in Fig. 1. As described above, the search condition input unit 111 displays a search condition input screen on the output device 350 to receive a search condition from a user. Also, the search results display unit 113 displays search results on the output device 350 or displays a search result display screen on the device 350 to receive an instruction from the user. The device 350 is, for example, a CRT display device.

The network interface 360 includes an interface for an outside network or an inside network such as in-house LAN, and connects the computer 300 to the other terminals. The computer 300 can be connected to a necessary server or other user terminals via the network interface.

The storage medium drive 370 reads out data from a storage medium 380 such as a floppy disk, a CD-ROM, and if necessary, transfers the data to the memory 320 or the storage device 330 in the computer 300. Data in the storage medium 380 may includes the above mentioned program which controls each unit of the invention.

The bus 390 connects each element (the CPU 310 - the storage medium drive 370) and transfers data or commands between the elements.

As set forth above, according to an electronic manual search system of the invention, the reference number of a topic is automatically counted and the number is stored for each topic, and thereby "importance of information" for topics can be managed.

Further, according to the system, in searching operation, priority to be searched and displayed is given to topics which have a large reference number.

Still further, according to the system, search time to search the electronic manual can be reduced as a whole by using the reference number of each topic.

## Claims

1. An electronic manual search system (100) including an electronic manual (120) which is composed of a plurality of parts, the system comprising:
a reference number table (130) which stores, for each part of the electronic manual (120), reference number expressing the number of times the part is referred to by a user;
a search process unit (112) which searches contents of the parts based on a search condition; and
a search result display unit (114) which displays parts which resulted from the search process unit (112), in order based on the reference number.

2. The electronic manual search system (100) of claim 1, wherein the search process unit (112) searches contents of each part in order based on the reference number.

3. The electronic manual search system (100) of claim 1 further comprising a reference number update unit (114) which increments by one the reference number of a part when the user selects and/or refers to the part among parts which are displayed by the search result display unit (114).

4. The electronic manual search system (100) of claim 1 further comprising a reference number update unit (114) which increments by one the reference number of a part displayed immediately before the user stops displaying of the search results.

5. The electronic manual search system (100) of claim 1, wherein the order of displaying the searched parts is a descending order of the reference number of the parts.

6. The electronic manual search system (100) of claim 2, wherein the order of searching the parts is a descending order of the reference number of the parts.

7. The electronic manual search system (100) of claim 1, wherein the reference number table (130) is incorporated into the electronic manual (120).

8. The electronic manual search system (100) of claim 1, wherein the reference number table (130) stores the reference number for each attribute of the user.

9. An electronic manual search system (100) including an electronic manual (120) which is composed of a plurality of parts, the system comprising:
a reference number table (130) which stores, for each part of the electronic manual (120), reference number expressing the number of times the part is referred to by a user; and
a search process unit (112) which searches contents of the parts for topics satisfying a search condition in order based on the reference number.

10. A method of searching an electronic manual (120) which is composed of a plurality of parts, the method comprising the steps of:
storing, for each part, reference number expressing the number of times the part is referred to by a user;
searching contents of the parts based on a search condition; and
displaying parts which resulted from the searching step, in order based on the reference number.

11. The method of claim 10, wherein the searching step searches contents of each part in order based on the reference number.

12. The method of claim 10, wherein the order of displaying the searched parts is a descending order of the reference number of the parts.

13. The method of claim 11, wherein the order of searching the parts is a descending order of the reference number of the parts.

14. A recording medium readable by a computer, embodying an electronic manual (120) comprising:
a plurality of parts; and.
a reference number of each part, the reference number representing the number of times the corresponding topic is referred to as searched results.

15. The recording medium of claim 14, wherein the reference number is stored for each attribute of a user who refers to the part as searched results.

16. A recording medium readable by a computer; embodying a program of instructions executable by the computer to perform a method of searching an electronic manual (120) which is composed of a plurality of parts, the method comprising the steps of:
storing, for each part, reference number expressing the number of times the part is referred to by a user;
searching contents of the parts based on a search condition; and
displaying parts which are obtained by the searching step as search results, in order based on the reference number.

17. A recording medium readable by a computer, embodying a program of instructions executable by the computer to perform a method of searching an electronic manual (120) which is composed of a plurality of parts, the method comprising the steps of:
storing, for each part, reference number expressing the number of times the part is referred to by a user; and
searching contents of the parts for topics satisfying a search condition in order based on the reference number.

18. A program product comprising, computer readable instructions and a recording medium bearing the computer readable instructions; the instructions being adaptable to enable a computer to operate according to the steps of:
storing, for each part of an electronic manual, reference number expressing the number of times the part is referred to by a user;
searching contents of the parts based on a search condition; and
displaying parts which are resulted from the searching step, in order based on the reference number.
